# EUROPÄISCHE PATENTSCHRIFT

(11) **EP 2 495 124 B1**
(45) Veröffentlichungstag und Bekanntmachung des Hinweises auf die Patenterteilung: **13.07.2016**
(21) Anmeldenummer: 12000383.5
(22) Anmeldetag: 21.01.2012
(51) Int. Cl.: B60K 35/00, B60K 37/00, G08G 1/0967, G08G 1/0968, B60W 50/14

(54) **Kraftfahrzeug**
Motor vehicle
Véhicule automobile

(30) Priorität: 02.03.2011 DE 102011012791
(43) Veröffentlichungstag der Anmeldung: 05.09.2012
(73) Patentinhaber: Audi AG, 85045 Ingolstadt (DE)
(72) Erfinder: Schumann, Toralf, 98724 Neuhaus (DE)
(74) Vertreter: Thielmann, Frank

(56) Entgegenhaltungen:
- EP-A1- 2 204 301
- EP-A2- 1 995 116
- DE-A1-102008 040 982
- DE-A1-102009 030 263
- FR-A1- 2 847 703

## Beschreibung

Die Erfindung betrifft ein Kraftfahrzeug, umfassend wenigstens eine Erfassungseinrichtung zur Erfassung der aktuell von dem Kraftfahrzeug befahrenen Strecke sowie der aktuellen Position des Kraftfahrzeugs auf der Strecke, wenigstens eine Speichereinrichtung enthaltend streckenbezogene Verkehrszeicheninformationen, sowie wenigstens eine zur Ausgabe wenigstens einer streckenbezogenen Verkehrszeicheninformationen über ein Ausgabemittel ausgebildete Steuereinrichtung.

Moderne Kraftfahrzeuge sind üblicherweise mit einem Fahrerassistenzsystem beispielsweise in Form einer Navigationseinrichtung, welche einem Fahrer eine Zielführung zu einem fahrerseitig vorzugebenden Zielort ermöglicht, ausgestattet. Zu den im Rahmen der von dem Fahrerassistenzsystem berücksichtigten streckenbezogenen Informationen zählen insbesondere auch Verkehrszeichen, d. h. Verkehrsschilder, die bei Erreichen des jeweiligen Streckenabschnitts, in dem sich das Verkehrszeichen befindet, über ein Ausgabemittel ausgebbar sind. Die hierfür erforderlichen, die Verkehrszeichen betreffenden Verkehrszeicheninformationen sind üblicherweise in einer Speichereinrichtung hinterlegt oder werden von einer Verkehrszeichenerfassungseinrichtung erfasst und der Steuereinrichtung zugeführt, um von dieser über ein Ausgabemittel ausgegeben zu werden.

Das gattungsbildend Dokument DE 102008 040 982A beschreibt ein solchen Fahrzeug. Hierbei ist es nachteilig, dass dem Fahrer erst bei Erreichen des Streckenabschnitts, in dem sich das Verkehrszeichen auch tatsächlich befindet, eine entsprechende Information mitgeteilt wird, so dass dieser beispielsweise erst bei tatsächlichem Erreichen etwa eines Streckenabschnitts mit einer reduzierten Höchstgeschwindigkeit einen entsprechenden Hinweis erhält, worauf er die Geschwindigkeit des Kraftfahrzeugs entsprechend schnell anpassen bzw. reduzieren muss. Derart ist jedoch eine vorausschauende, kraftstoffsparende Fahrweise erschwert bzw. gegebenenfalls sogar die Gefahr von Kollisionen erhöht, insbesondere wenn der Fahrer die Geschwindigkeit des Kraftfahrzeugs abrupt anpasst, d. h. das Kraftfahrzeug abrupt verzögert.

Der Erfindung liegt damit das Problem zugrunde, ein, insbesondere im Hinblick auf die Möglichkeit einer vorausschauenden Fahrweise, verbessertes Kraftfahrzeug anzugeben.

Zur Lösung des Problems ist bei einem Kraftfahrzeug der eingangs genannten Art erfindungsgemäß vorgesehen, dass die wenigstens eine streckenbezogene Verkehrszeicheninformation wenigstens eine erste, wenigstens ein bezüglich der aktuellen Position des Kraftfahrzeugs auf der Strecke vorausliegendes Verkehrszeichen betreffende Information sowie wenigstens eine zweite, ein Maß für den Abstand des vorausliegenden Verkehrszeichens zur aktuellen Position des Kraftfahrzeugs darstellende Information umfasst.

Das erfindungsgemäße Kraftfahrzeug bietet dem Fahrer im Rahmen der Ausgabe der wenigstens einen streckenbezogenen Verkehrszeicheninformation neben einem Hinweis auf das oder die bezogen auf die von dem Kraftfahrzeug befahrene Strecke aktuell vorausliegende Verkehrszeichen in Form der ersten Information, in Form der zweiten Information auch eine qualitative und/oder quantitative Angabe, in welcher Entfernung sich das oder die vorausliegenden Verkehrszeichen relativ zur aktuellen Fahrzeugposition befindet. Entsprechend ist der Fahrer umfassend über sämtliche, auf der von ihm befahrenen Strecke vorausliegenden Verkehrszeicheninformation informiert und kann sein Fahrverhalten frühzeitig an eine sich ändernde Verkehrssituation anpassen.

Grundsätzlich gibt die Steuereinrichtung die wenigstens eine streckenbezogene Verkehrszeicheninformation nur bezüglich des unmittelbar nächsten vorausliegenden Verkehrszeichens aus. Selbstverständlich ist es jedoch auch möglich, entsprechende streckenbezogene Verkehrszeicheninformationen auch für eine Mehrzahl an vorausliegenden Verkehrszeichen auszugeben.

Der erfindungsgemäß verwendete Begriff eines Verkehrszeichens umfasst grundsätzlich sämtliche bekannten Verkehrszeichen. Mithin kann das vorausliegende Verkehrszeichen beispielsweise ein Gebotszeichen und/oder ein Verbotszeichen und/oder ein Gefahrzeichen und/oder eine Geschwindigkeitsbeschränkung sein. Entsprechend wird dem Fahrer im Rahmen der ersten Information grundsätzlich angegeben, welche Relevanz bzw. Qualität die bevorstehende, durch das vorausliegende Verkehrszeichen ausgedrückte Änderung der vorausliegenden Strecke respektive des vorausliegenden Verkehrs hat.

Hierzu sind eine Vielzahl an Ausführungen denkbar. Gibt die wenigstens eine streckenbezogene Verkehrszeicheninformation beispielsweise an, dass eine Geschwindigkeitsbeschränkung in 300 m bevorsteht, d. h. die erste Information gibt die Geschwindigkeitsbeschränkung und die zweite Information ein Maß für den Abstand von 300 m der vorausliegenden Geschwindigkeitsbeschränkung zur aktuellen Position des Kraftfahrzeugs an, weiß der Fahrer frühzeitig, dass er seine aktuelle Geschwindigkeit gegebenenfalls reduzieren muss und wie viel Zeit bzw. welche Distanz ihm in Abhängigkeit der aktuellen Position des Kraftfahrzeugs zu der bevorstehenden Geschwindigkeitsbeschränkung verbleibt.

In einem anderen beispielhaften Fall gibt die wenigstens eine streckenbezogene Verkehrszeicheninformation beispielsweise an, dass in 1 km ein Überholverbot bevorsteht, d. h., die erste Information gibt in diesem Fall das Überholverbot und die zweite Information ein Maß für den Abstand von 1 km des vorausliegenden Überholverbots zur aktuellen Position des Kraftfahrzeugs an. Der Fahrer erfährt hier frühzeitig, dass er gegebenenfalls noch zu überholende Verkehrsteilnehmer wie andere Fahrzeuge oder dergleichen demnächst, d. h. innerhalb des streckenbezogenen nächsten Kilometers überholen sollte.

In einem weiteren beispielhaften Fall gibt die wenigstens eine streckenbezogene Verkehrszeicheninformation beispielsweise an, dass in 500 m eine Brücke überfahren wird, über welche lediglich Fahrzeuge, deren Masse einschließlich Ladung eine tatsächliche Grenze von 5,5 t nicht überschreitet, fahren dürfen, d. h. hier gibt die erste Information ein Verbotszeichen für Fahrzeuge, deren Masse einschließlich Ladung eine tatsächliche Grenze von 5,5 t überschreitet und die zweite Information ein Maß für den Abstand von 500 m des vorausliegenden Verbotszeichens zur aktuellen Position des Kraftfahrzeugs an.

In dem letztgenannten Beispiel erkennt der Fahrer eines Kraftfahrzeugs in Form eines Personenkraftwagens anhand der Ausgabe der wenigstens einen streckenbezogenen Verkehrszeicheninformation, dass diese für ihn nicht von Relevanz ist, wohingegen die wenigstens eine streckenbezogene Verkehrszeicheninformation für den Fahrer eines Lastkraftwagens, welcher Lastkraftwagen gleichermaßen von dem erfindungsgemäßen Kraftfahrzeug umfasst wird, durchaus von Relevanz sein kann.

Es ist weiterhin denkbar, dass die Steuereinrichtung im Rahmen der Ermittlung der wenigstens einen streckenbezogenen Verkehrszeicheninformation wenigstens eine Randbedingung berücksichtigt. Dabei ist es möglich, dass eine Randbedingung, beispielsweise eine dem Istfahrzustand des Kraftfahrzeugs betreffende Istfahrzustandsinformation wie z. B. die aktuelle Fahrzeuggeschwindigkeit und/oder sonstige Fahrzeuginformation wie Abmessungen, Gewicht etc. des Fahrzeugs ist und daher vorab im Hinblick auf den Istfahrzustand des Kraftfahrzeugs respektive sonstige Fahrzeuginformationen nicht relevante Verkehrszeicheninformationen gefiltert bzw. nicht ausgegeben werden. Mithin ist es denkbar, dass bei gemäßigter Fahrweise des Fahrers unterhalb einer vorausliegenden Geschwindigkeitsbeschränkung keine entsprechende Verkehrszeicheninformation ausgegeben wird oder in Anlehnung an das obige Beispiel sämtliche für den Fahrer eines Personenkraftwagens regelmäßig irrelevante für einen bestimmten vorausliegenden Streckenabschnitt zulässige Höhen, Massen, Achslasten etc. betreffende Verkehrszeicheninformationen nicht ausgegeben werden.

Weiterhin kann im Rahmen der Berücksichtigung der wenigstens einen Randbedingung, wie insbesondere der den Istfahrzustand des Kraftfahrzeugs betreffenden Istfahrzustandsinformation, wie z. B. der aktuellen Fahrzeuggeschwindigkeit, und/oder sonstiger Fahrzeuginformationen, wie Abmessungen, Massen etc., des Fahrzeugs auch eine angepasste Ausgabe der wenigstens einen streckenbezogenen Verkehrszeicheninformation, d. h. insbesondere der zweiten, ein Maß für den Abstand des vorausliegenden Verkehrszeichens zur aktuellen Position des Kraftfahrzeugs darstellende Information möglich ist, so dass etwa bei Fahrt mit hoher Geschwindigkeit die wenigstens eine streckenbezogene Verkehrszeicheninformation zeitlich früher oder mit einer anderen Intensität ausgebbar ist respektive die zweite Information einen weiteren Korridor bis zum Erreichen der entsprechenden Geschwindigkeitsbeschränkung aufspannt.

Bevorzugt enthält die zweite, ein Maß für den Abstand des vorausliegenden Verkehrszeichens zur aktuellen Position des Kraftfahrzeugs darstellende Information wenigstens einen Abstandswert, insbesondere den Abstand, und/oder wenigstens einen Zweitwert, insbesondere die Dauer, bis zum Erreichen des wenigstens einen Verkehrszeichens. Mithin kann der Fahrer durch den insbesondere qualitativ oder quantitativ ausgegebenen Abstandswert etwa in Angabe der Distanz zwischen seiner aktuellen Position relativ zu dem vorausliegenden Verkehrszeichen sein Fahrverhalten anpassen. Gleichermaßen kann ein Fahrer durch den Zeitwert abschätzen, wie lange es bis zum Erreichen des jeweiligen Verkehrszeichens dauert bzw. zu welcher Uhrzeit mit dem Erreichen des jeweiligen Verkehrszeichens zu rechnen ist.

Selbstverständlich ist die zweite Information, d. h. der Abstands- wie auch der Zeitwert in Abhängigkeit des sich bei Fahrt des Kraftfahrzeugs ändernden Abstands relativ zu dem jeweiligen Verkehrszeichen dynamisch anpassbar. Mithin ist die zweite Information in Abhängigkeit des sich ändernden Abstands des Kraftfahrzeugs zu dem vorausliegenden Verkehrszeichen mehrmalig ausgebbar. Denkbar ist es selbstverständlich auch, die zweite Information nur einmalig auszugeben.

Die erste und/oder zweite Information ist insbesondere optisch und/oder akustisch ausgebbar. Demnach kann ein Fahrer sowohl optisch über ein entsprechendes Anzeigemittel wie ein Display oder dergleichen oder akustisch über eine entsprechende Lautsprechereinrichtung oder dergleichen auf die wenigstens eine streckenbezogene Verkehrszeicheninformation hingewiesen werden.

Bevorzugt ist die optisch ausgebbare oder ausgegebene erste Information eine grafische Darstellung des vorausliegenden Verkehrszeichens und/oder eine dem vorausliegenden Verkehrszeichen entsprechende Textinformation. Sonach wird also z. B. ein originalgetreues grafisches Abbild des vorausliegenden Verkehrszeichens bzw. alternativ oder ergänzend eine dem vorausliegenden Verkehrszeichen entsprechende Textinformation wie beispielsweise "zulässige Höchstgeschwindigkeit 120 km/h", "generelles Überholverbot" oder dergleichen ausgegeben.

Die optisch ausgebbare oder ausgegebene zweite Information kann eine der ein Maß für den Abstand des vorausliegenden Verkehrszeichens zur aktuellen Position des Kraftfahrzeugs darstellende Information entsprechende Textinformation oder grafische Balkendarstellung sein. Die Textinformation kann ein statischer oder dynamischer Abstands- und/oder Zeitwert sein, die grafische Balkendarstellung kann in Abhängigkeit unterschiedlicher Abstände des Kraftfahrzeugs zu dem vorausliegenden Verkehrszeichen unterschiedliche Farben, Füllgrade oder dergleichen zeigen. Selbstverständlich können alternativ zu Balken auch andere grafische Darstellungen geometrischer Formen wie etwa Kreise, Dreiecke etc. möglich sein.

In vorteilhafter Weiterbildung der Erfindung umfasst die streckenbezogene Verkehrszeicheninformation zusätzlich eine dritte, wenigstens eine den Istfahrzustand des Kraftfahrzeugs betreffende Istfahrzustandsinformation und/oder wenigstens eine Fahrzeuginformation des Kraftfahrzeugs im Hinblick auf den Inhalt des wenigstens einen vorausliegenden Verkehrszeichens bewertende Warninformation. Die Warninformation weist den Fahrer insbesondere in Fällen, in denen eine dem Inhalt des vorausliegenden Verkehrszeichens entsprechende Fahrweise nur mit einem deutlichen Eingriff in den Istfahrzustand des Kraftfahrzeugs verbunden ist, auf eine entsprechende Dringlichkeit hin. Liegt beispielsweise in 500 m eine Geschwindigkeitsbeschränkung auf 80 km/h vor, wobei der Fahrer noch mit einer Geschwindigkeit oberhalb 200 km/h fährt, kann dieser durch die Warninformation, welche gleichermaßen optisch und/oder akustisch, d. h. insbesondere über entsprechende grafische Symbole, Textinformationen und/oder Warntöne ausgebbar ist, mit besonderem Nachdruck auf das bevorstehende Erfordernis der Geschwindigkeitsreduzierung hingewiesen werden. Das Prinzip ist beispielsweise auch bei einer mit einer zu hohen Geschwindigkeit angefahrenen geplanten Abfahrt von einer Autobahn oder bei einer bevorstehenden Ortsdurchfahrt nützlich, da der Fahrer derart einen dezidierten Hinweis erhält, dass seine Fahrweise dem bevorstehenden Streckenabschnitt aktuell nicht entspricht.

Die Ausgabe der ersten und/oder zweiten Information kann zweckmäßigerweise bedienerseitig konfigurierbar sein. Mithin kann ein Bediener bzw. Fahrer vorab auswählen, welche Verkehrszeichen von der Steuereinrichtung überhaupt berücksichtigt und im Rahmen der Ausgabe der wenigstens einen streckenbezogenen Verkehrszeicheninformation überhaupt ausgegeben werden sollen, so dass diesem beispielsweise die Fahrweise unmittelbar betreffende vorausliegende Gefahrzeichen und/oder Geschwindigkeitsbeschränkungen jedoch keine vorausliegenden Vorschriftszeichen wie z. B. Warte- und Haltegebote ausgegeben werden. Selbstverständlich ist die Ausgabe der ersten und/oder zweiten Information im Rahmen der bedienerseitigen Konfiguration auch zu- oder abschaltbar.

Es ist ferner zweckmäßig, wenn zusätzlich zu der wenigstens einen streckenbezogenen Verkehrszeicheninformation wenigstens eine ein bezüglich der aktuellen Position des Kraftfahrzeugs auf der Strecke aktuelles Verkehrszeichen darstellende Information ausgebbar ist. Derart ist der Fahrer sonach über geltende Verkehrszeicheninformationen zu dem aktuell befahrenen Streckenabschnitt sowie über die wenigstens eine streckenbezogene Verkehrszeicheninformation auch über vorausliegende Verkehrszeicheninformationen zu dem bevorstehenden Streckenabschnitt informiert und erhält ein umfassenderes Bild der von ihm befahrenen Strecke.

Gemäß einer weiteren Ausführungsform der Erfindung ist es denkbar, dass die Erfassungseinrichtung, die Speichereinrichtung sowie die Steuereinrichtung einer kraftfahrzeugseitig installierten Navigationseinrichtung zugeordnet sind, wobei sich die wenigstens eine streckenbezogene Verkehrszeicheninformation bei aktivierter Zielführung auf die der aktivierten Zielführung zugrunde liegende Strecke und bei nicht aktivierter Zielführung auf eine mit hoher Wahrscheinlichkeit von dem Kraftfahrzeug befahrene Strecke oder auf vorgebbare oder vorgegebene bestimmte Streckenabschnitte, insbesondere in einem vorgebbaren oder vorgegebenen Bereich vor einer vorausliegenden Abfahrmöglichkeit von einer Autobahn, bezieht. Mithin werden im ersten Fall lediglich die für die im Rahmen der Zielführung ausgewählte Strecke relevanten, vorausliegenden Verkehrszeichen berücksichtigt und entsprechende Verkehrszeicheninformationen ausgegeben. Alternativ dazu, d. h. bei nicht aktivierter Zielführung wird auf eine mit hoher Wahrscheinlichkeit von dem Kraftfahrzeug befahrene Strecke oder auf vorgebbare oder vorgegebene bestimmte Streckenabschnitte zurückgegriffen und entsprechende vorausliegende Verkehrszeichen im Rahmen der Ausgabe der wenigstens einen Verkehrszeicheninformation berücksichtigt. Die Ermittlung bzw. Berechnung der mit hoher Wahrscheinlichkeit von dem Kraftfahrzeug befahrenen Strecke ist über gängige Navigationseinrichtungen problemlos durchführbar und bedarf an dieser Stelle keiner weiteren Erläuterung. Die vorgebbaren oder vorgegebenen bestimmten Streckenabschnitte, wie beispielsweise vorgebbare oder vorgegebene Bereiche vor einer vorausliegenden Abfahrmöglichkeit von einer Autobahn können beispielsweise werksseitig oder bedienerseitig vorgegeben werden, so dass es möglich ist, die Steuereinrichtung derart zu programmieren, dass die wenigstens eine Verkehrszeicheninformation für bedienerseitig ausgewählte Streckenabschnitte einer Strecke ausgebbar ist bzw. ausgegeben wird.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung eines erfindungsgemäßen Kraftfahrzeugs,
- Fig. 2: eine Prinzipdarstellung einer erfindungsgemäßen streckenbezogenen Verkehrszeicheninformation gemäß einer ersten Ausführungsform,
- Fig. 3: eine Prinzipdarstellung einer erfindungsgemäßen streckenbezogenen Verkehrszeicheninformation gemäß einer zweiten Ausführungsform,
- Fig. 4: eine Prinzipdarstellung einer erfindungsgemäßen streckenbezogenen Verkehrszeicheninformation gemäß einer dritten Ausführungsform, und
- Fig. 5: eine Prinzipdarstellung einer erfindungsgemäßen streckenbezogenen Verkehrszeicheninformation gemäß einer vierten Ausführungsform

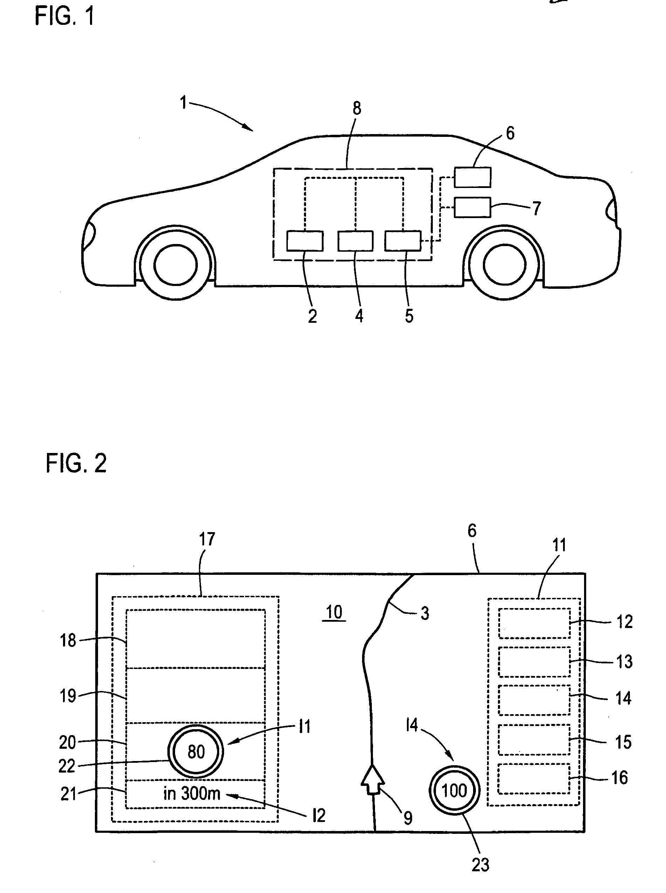

Fig. 1 zeigt eine Prinzipdarstellung eines erfindungsgemäßen Kraftfahrzeugs 1. Das Kraftfahrzeug 1 umfasst eine Erfassungseinrichtung 2 zur Erfassung der aktuell von dem Kraftfahrzeug 1 befahrenen Strecke 3 (vgl. Fig. 2) sowie der aktuellen Position des Kraftfahrzeugs 1 auf der Strecke 3, eine datenbankartige Speichereinrichtung 4 enthaltend streckenbezogene Verkehrszeicheninformation sowie eine Steuereinrichtung 5 zur Ausgabe wenigstens einer streckenbezogenen Verkehrszeicheninformation über ein Ausgabemittel in Form eines Displays 6 bzw. einer Lautsprechereinrichtung 7. Ersichtlich kommunizieren die Erfassungseinrichtung 2, die Speichereinrichtung 4 sowie die Steuereinrichtung 5 über einen Teil eines Fahrzeugnetzwerks bildende Kommunikationsleitungen. Wie durch den die Erfassungseinrichtung 2, die Speichereinrichtung 4 sowie die Steuereinrichtung 5 umgebenden gestrichelten Rahmen angedeutet, können diese Komponenten einer fahrzeugseitig installierten Navigationseinrichtung 8 sein.

In üblicher Weise wird, wie in Fig. 2 dargestellt ist, während des Betriebs des Kraftfahrzeugs 1, d. h. bei Fahrt des Kraftfahrzeugs 1 entlang einer Strecke 3, d. h. beispielsweise einer Autobahn, Landstraße, einer Straße innerhalb eines Ortes etc., die aktuelle Position des Kraftfahrzeugs 1 durch ein grafisches Symbol wie den Pfeil 9 auf der Strecke 3 über das Display 6 ausgegeben. Das durch den Pfeil 9 symbolisierte Kraftfahrzeug 1 bewegt sich dabei in einer eine zwei- oder dreidimensionale Karte abbildenden grafischen Umgebung 10.

Dabei können in einer beispielhaften Anzeigeleiste 11 weitere, während der Fahrt gegebenenfalls relevante Informationen wie beispielsweise ein Kompass (Kasten 12), eine Skalierung der Kartendarstellung der Umgebung 10 (Kasten 13), bei aktivierter Zielführung der Navigationseinrichtung 8 die bis zum Zielort zurückzulegende Strecke (Kasten 14), eine voraussichtliche Restdauer bis zur Ankunft an dem Zielort (Kasten 15) und eine Höhenangabe (Kasten 16) ausgegeben werden. In einer beispielhaften weiteren Anzeigeleiste 17 können zudem Angaben über einen vorausliegenden Parkplatz (Kasten 18), eine vorausliegende, im Rahmen der Zielführung ermittelte Abzweigung zu einer neuen Strecke bzw. Straße (Kasten 19) ausgegeben werden.

Die erfindungsgemäße wenigstens eine streckenbezogene Verkehrszeicheninformation wird in den Kästen 20, 21 dargestellt, wobei innerhalb des Kastens 20 eine erste, wenigstens ein bezüglich der aktuellen Position des Kraftfahrzeugs 1 auf der Strecke 3 vorausliegendes Verkehrszeichen 22 betreffende Information I1 ausgebbar bzw. ausgegeben ist und innerhalb des Kastens 21 eine zweite, ein Maß für den Abstand des vorausliegenden Verkehrszeichens 22 zur aktuellen Position des Kraftfahrzeugs 1 darstellende Information I2 ausgebbar bzw. ausgegeben ist. Dabei kann das vorausliegende Verkehrszeichen 22 jedwedes Verkehrszeichen sein, lediglich beispielhaft ist eine Geschwindigkeitsbeschränkung auf 80 km/h gezeigt.

Ersichtlich liegt die erste Information I1 als grafische Darstellung einer vorausliegenden Geschwindigkeitsbeschränkung auf 80 km/h und die zweite Information 12 als eine einen Abstandswert der aktuellen Position des Kraftfahrzeugs 1 zu dem vorausliegenden Verkehrszeichen 22 beschreibende Textinformation "in 300 m" vor. Gleichermaßen könnte die zweite Information I2 auch einen Zeitwert, insbesondere die Dauer bis zum Erreichen des vorausliegenden Verkehrszeichens 22 wie etwa "in 2 Minuten" beschreiben. Die zweite Information I2 ist vorzugsweise in Abhängigkeit des sich ändernden Abstands des Kraftfahrzeugs 1 zu dem vorausliegenden Verkehrszeichen 22 mehrmalig ausgebbar, d. h. dynamisch an den aktuellen Abstand des Kraftfahrzeugs 1 relativ zu dem vorausliegenden Verkehrszeichen 22 anpassbar ausgebbar.

Neben der als reine Textinformation vorliegenden zweiten Information I2 könnte diese alternativ oder ergänzend auch als eine grafische Darstellung, beispielsweise in Form einer grafischen Balkendarstellung (nicht gezeigt) ausgegeben werden, welcher Balken sich in Abhängigkeit der aktuellen Position des Kraftfahrzeugs 1 relativ zu dem vorausliegenden Verkehrszeichen 22 füllt oder leert.

Es ist ebenso denkbar, die erste und/oder die zweite Information 11, I2 alternativ oder ergänzend auch über die Lautsprechereinrichtung 7 akustisch auszugeben.

Durch die kombinierte Darstellung sowohl der Art bzw. des Inhalts des unmittelbar vorausliegenden Verkehrszeichens 22 in Form der ersten Information I1 als auch der bis zu diesem zurückzulegenden Strecke bzw. Dauer in Form der zweiten Information I1 ist eine vorausschauende und somit kraftstoffsparende, ökonomische Fahrweise erleichtert, da der Fahrer frühzeitig über dem jeweiligen Inhalt des wenigstens einen vorausliegenden Verkehrszeichens 22 entsprechende Verkehrsänderungen informiert ist.

Zusätzlich zu den vorgenannten Darstellungen ist es möglich, in dem Display 6 wenigstens eine ein bezüglich der aktuellen Position des Kraftfahrzeugs 1 auf der Strecke 3 aktuelles Verkehrszeichen 23 darstellende Information I4 auszugeben.

Die vorstehende Beschreibung basiert auf der Annahme, dass eine Zielführung der Navigationseinrichtung 8 aktiviert ist, wobei sich die erfindungsgemäße streckenbezogene Verkehrsinformation, d. h. die erste Information I1 und die zweite Information I2 auf die der aktivierten Zielführung zugrunde liegende Strecke 3 bezieht. Im Falle einer nicht aktivierten Zielführung bezieht sich die erfindungsgemäße streckenbezogene Verkehrszeicheninformation, d. h. die erste Information I1 bzw. die zweite Information I2 auf eine über die Steuereinrichtung 5 ermittelte, von dem Kraftfahrzeug 1 mit hoher Wahrscheinlichkeit befahrene Strecke 3. Gleichermaßen wäre es denkbar, die streckenbezogene Verkehrszeicheninformation bei bestimmten vorgebbaren oder vorgegebenen Streckenabschnitten, beispielsweise in einem vorgebbaren oder vorgegebenen Bereich vor einer vorausliegenden Abfahrmöglichkeit von einer Autobahn, auszugeben.

Wenngleich im Rahmen der Beschreibung der Darstellung gemäß Fig. 2 von Kästen die Rede ist, ist es nicht zwingend notwendig, dass in dem Display 6 auch tatsächlich entsprechende grafische Kästen angezeigt werden, mithin sind die Kästen gestrichelt dargestellt und grundsätzlich im Sinne von Platzhaltern zu verstehen, in welchen bestimmte Informationen darstellbar bzw. ausgebbar sind.

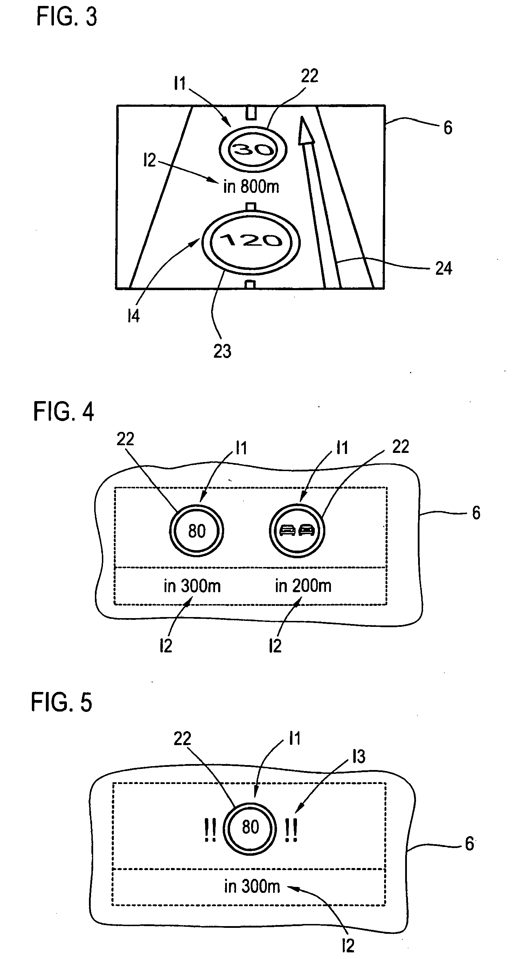

Fig. 3 zeigt eine Prinzipdarstellung einer erfindungsgemäßen streckenbezogenen Verkehrszeicheninformation gemäß einer zweiten Ausführungsform. Diese unterscheidet sich zu der in Fig. 2 gezeigten Ausführungsform im Wesentlichen durch die grafische Anordnung der die erfindungsgemäße streckenbezogene Verkehrszeicheninformation bildenden ersten bzw. zweiten Information I1, I2, welche hier direkt auf der dargestellten Strecke 3 abgebildet sind. Zusätzlich ist eine ein bezüglich der aktuellen Position des Kraftfahrzeugs 1 auf der Strecke 3 aktuelles Verkehrszeichen 23 darstellende Information I4 ausgegeben, welche in der Darstellung gemäß Fig. 3 vor der erfindungsgemäßen streckenbezogenen Verkehrszeicheninformation angeordnet ist, so dass der Fahrer auf einfache Weise erkennt, dass aktuell noch eine Geschwindigkeitsbeschränkung von 120 km/h und in 800 m eine Geschwindigkeitsbeschränkung von 30 km/h gilt, so dass er vorausschauend eine Geschwindigkeitsreduzierung vornehmen kann. Die Route des Kraftfahrzeugs 1 ist im Falle einer aktivierten Zielführung der Navigationseinrichtung 8 durch den Pfeil 24 dargestellt. Die Darstellung gemäß Fig. 3 eignet sich insbesondere für eine sogenannte "Clusterinstrumentendarstellung" bzw. ein sogenanntes Head-Up-Display.

Fig. 4 zeigt Prinzipdarstellungen zweier erfindungsgemäßer streckenbezogener Verkehrszeicheninformationen. Mithin ist es im Rahmen der Erfindung auch denkbar, mehrere streckenbezogene Verkehrszeicheninformationen auszugeben, wie in Fig. 4 durch die Geschwindigkeitsbeschränkung auf 80 km/h in 300 m sowie ein generelles Überholverbot in 200 m jeweils relativ zur aktuellen Position des Kraftfahrzeugs 1 gezeigt ist. Die jeweils aktuelle, d. h. nächst vorausliegende Verkehrszeicheninformation kann zur besseren Hervorhebung beispielsweise farblich dargestellt bzw. hervorgehoben werden wohingegen die zu einem gegebene Zeitpunkt weiter von dem Kraftfahrzeug 1 entfernte Verkehrszeicheninformation grau hinterlegt dargestellt sein kann. Derart kann der Fahrer auf einfache Weise unterscheiden, welche Verkehrszeicheninformation bzw. damit verbundene Änderung seiner Fahrweise aktueller ist.

Fig. 5 zeigt eine Prinzipdarstellung einer erfindungsgemäßen streckenbezogener Verkehrszeicheninformation gemäß einem vierten Ausführungsbeispiel. Der wesentliche Unterschied zu den vorangegangenen Ausführungsbeispielen besteht darin, dass hier zusätzlich eine dritte, wenigstens eine den Istfahrzustand des Kraftfahrzeugs 1 betreffende Istfahrzustandsinformation und/oder wenigstens eine Fahrzeuginformation des Kraftfahrzeugs 1 im Hinblick auf den Inhalt des wenigstens einen vorausliegenden Verkehrszeichens 22 bewertende Warninformation I3 in Form der Ausrufezeichen dargestellt wird. Demnach kann ein Fahrer dahingehend gewarnt werden, dass die dem Inhalt des vorausliegenden Verkehrszeichens 22 entsprechende Änderung seiner Fahrweise schnell bzw. dringend umzusetzen ist. Im vorliegenden Fall wird insbesondere die aktuelle Fahrzeuggeschwindigkeit mit der dem vorausliegenden Verkehrszeichen 22 entsprechenden Geschwindigkeitsbeschränkung verglichen und unter Berücksichtigung der verbleibenden Entfernung, welche durch die zweite Information I2 dargestellt ist, die vorausliegende Geschwindigkeitsbeschränkung gegebenenfalls durch eine veränderliche Anzahl an Symbolen wie vorliegend den Ausrufezeichen stärker hervorgehoben. Dies kann gegebenenfalls durch die Ausgabe eines gegebenenfalls veränderlichen akustischen Warntons unterstützt werden.

Im Rahmen der Ermittlung bzw. Ausgabe der streckenbezogenen Verkehrszeicheninformation können bestimmte Randbedingungen, wie insbesondere einer den Istfahrzustand des Kraftfahrzeugs betreffenden Istfahrzustandsinformation, wie z. B. der aktuellen Fahrzeuggeschwindigkeit, und/oder sonstiger Fahrzeuginformationen, wie Fahrzeugabmessungen, Fahrzeugmasse etc. berücksichtigt werden, so dass eine angepasste Ausgabe der wenigstens einen streckenbezogenen Information, d. h. insbesondere der zweiten, ein Maß für den Abstand des vorausliegenden Verkehrszeichens zur aktuellen Position des Kraftfahrzeugs darstellende Information möglich ist. Entsprechend kann etwa bei Fahrt mit hoher Geschwindigkeit die wenigstens eine streckenbezogene Verkehrszeicheninformation zeitlich früher ausgebbar sein respektive die zweite Information einen weiteren Korridor bis zum Erreichen der entsprechenden Geschwindigkeitsbeschränkung aufspannen.

Grundsätzlich ist die Ausgabe der ersten und/oder zweiten Information I1, 12 bedienerseitig konfigurierbar. Entsprechend kann ein Bediener vorgeben, welche Art von Verkehrszeichen 22 im Rahmen der Ermittlung und Ausgabe der wenigstens einen streckenbezogenen Verkehrszeicheninformation berücksichtigt werden sollen, so dass beispielsweise nur für Personenkraftwagen relevante Verkehrszeichen berücksichtigt und ausgegeben werden. Auch der von der Steuereinrichtung 5 im Rahmen der Ermittlung der wenigstens einen streckenbezogenen Verkehrszeicheninformation berücksichtigte Streckenbereich vor dem Kraftfahrzeug 1 ist derart einstellbar, so dass sich ein Fahrer beliebig weit vorausliegende Verkehrszeichen 22 respektive den noch bis zum Erreichen dieser zurückzulegenden Weg bzw. die Zeitdauer anzeigen lassen kann.

## Patentansprüche

1. Kraftfahrzeug, umfassend wenigstens eine Erfassungseinrichtung zur Erfassung der aktuell von dem Kraftfahrzeug befahrenen Strecke sowie der aktuellen Position des Kraftfahrzeugs auf der Strecke, wenigstens eine Speichereinrichtung enthaltend streckenbezogene Verkehrszeicheninformationen, sowie wenigstens eine zur Ausgabe wenigstens einer streckenbezogenen Verkehrszeicheninformationen über ein Ausgabemittel ausgebildete Steuereinrichtung, wobei
die wenigstens eine streckenbezogene Verkehrszeicheninformation wenigstens eine erste, wenigstens ein bezüglich der aktuellen Position des Kraftfahrzeugs (1) auf der Strecke (3) vorausliegendes Verkehrszeichen (22) betreffende Information (I1) sowie wenigstens eine zweite, ein Maß für den Abstand des vorausliegenden Verkehrszeichens (22) zur aktuellen Position des Kraftfahrzeugs (1) darstellende Information (I2) umfasst, **dadurch gekennzeichnet, dass** die Ausgabe der ersten und/oder zweiten Information (I1, I2) bedienerseitig bezüglich der Art von Verkehrszeichen, die im Rahmen der Ermittlung und Ausgabe der wenigstens einen streckenbezogenen Verkehrszeicheninformation zu berücksichtigt sind, konfigurierbar ist.

2. Kraftfahrzeug nach Anspruch 1,
**dadurch gekennzeichnet,**
**dass** die zweite, ein Maß für den Abstand des vorausliegenden Verkehrszeichens (22) zur aktuellen Position des Kraftfahrzeugs (1) darstellende Information (I2) wenigstens einen Abstandswert, insbesondere den Abstand, und/oder wenigstens einen Zeitwert, insbesondere die Dauer, bis zum Erreichen des wenigstens einen Verkehrszeichens (22) enthält.

3. Kraftfahrzeug nach Anspruch 1 oder 2,
**dadurch gekennzeichnet,**
**dass** die erste und/oder zweite Information (I1, I2) optisch und/oder akustisch ausgebbar ist.

4. Kraftfahrzeug nach Anspruch 3,
**dadurch gekennzeichnet,**
**dass** die optisch ausgebbare oder ausgegebene erste Information (I1) eine grafische Darstellung des vorausliegenden Verkehrszeichens (22) und/oder eine dem vorausliegenden Verkehrszeichen (22) entsprechende Textinformation ist.

5. Kraftfahrzeug nach Anspruch 3 oder 4,
**dadurch gekennzeichnet,**
**dass** die optisch ausgebbare oder ausgegebene zweite Information (I2) eine der ein Maß für den Abstand des vorausliegenden Verkehrszeichens (22) zur aktuellen Position des Kraftfahrzeugs (1) darstellenden Information entsprechende Textinformation oder grafische Balkendarstellung ist.

6. Kraftfahrzeug nach einem der vorangehenden Ansprüche,
**dadurch gekennzeichnet,**
**dass** die zweite Information (I2) einmalig oder in Abhängigkeit des sich ändernden Abstands des Kraftfahrzeugs (3) zu dem vorausliegenden Verkehrszeichen (22) mehrmalig ausgebbar ist.

7. Kraftfahrzeug nach einem der vorangehenden Ansprüche,
**dadurch gekennzeichnet,**
**dass** das Verkehrszeichen (22) ein Gebotszeichen und/oder ein Verbotszeichen und/oder ein Gefahrzeichen und/oder eine Geschwindigkeitsbeschränkung ist.

8. Kraftfahrzeug nach einem der vorangehenden Ansprüche,
**dadurch gekennzeichnet,**
**dass** die streckenbezogene Verkehrszeicheninformation zusätzlich eine dritte, wenigstens eine den Istfahrzustand des Kraftfahrzeugs (1) betreffende Istfahrzustandsinformation und/oder wenigstens eine Fahrzeuginformation des Kraftfahrzeugs (1) im Hinblick auf den Inhalt des wenigstens einen vorausliegenden Verkehrszeichens (22) bewertende Warninformation (I3) umfasst.

9. Kraftfahrzeug nach einem der vorangehenden Ansprüche,
**dadurch gekennzeichnet,**
**dass** zusätzlich zu der wenigstens einen streckenbezogenen Verkehrszeicheninformation, wenigstens eine ein bezüglich der aktuellen Position des Kraftfahrzeugs (1) auf der Strecke aktuelles Verkehrszeichen (23) darstellende Information (I4) ausgebbar ist.

10. Kraftfahrzeug nach einem der vorangehenden Ansprüche,
**dadurch gekennzeichnet,**
**dass** die Erfassungseinrichtung (2), die Speichereinrichtung (4) sowie die Steuereinrichtung (5) einer kraftfahrzeugseitig installierten Navigationseinrichtung (8) zugeordnet sind, wobei sich die wenigstens eine streckenbezogene Verkehrszeicheninformation bei aktivierter Zielführung auf die der aktivierten Zielführung zugrundeliegende Strecke (3) und bei nicht aktivierter Zielführung auf eine mit hoher Wahrscheinlichkeit von dem Kraftfahrzeug (1) befahrene Strecke (3) oder auf vorgebbare oder vorgegebene bestimmte Streckenabschnitte bezieht.

## Claims

1. Motor vehicle, comprising at least one detection device for detecting the actual route travelled by the motor vehicle and the actual position of the motor vehicle on the route, at least one storage device containing route-specific road sign information, and at least one control device designed to output at least one piece of route-specific road sign information via an output means, wherein the at least one piece of route-specific road sign information comprises at least one first piece of information (I1) relating to at least one road sign (22) ahead of the actual position of the motor vehicle (1) on the route (3), and at least one second piece of information (12) representing a value for the distance between the road sign (22) ahead and the actual position of the motor vehicle (1), **characterised in that** the output of the first and/or second piece of information (I1, 12) can be configured by the user with regard to the type of road signs which are to be taken into consideration for the detection and output of the at least one piece of route-specific road sign information.

2. Motor vehicle according to claim 1, **characterised in that** the second piece of information (12) representing a value for the distance between the road sign (22) ahead and the actual position of the motor vehicle (1) comprises at least one distance value, in particular the distance, and/or at least one time value, in particular the time period, to reaching the at least one road sign (22).

3. Motor vehicle according to claim 1 or 2, **characterised in that** the first and/or second piece of information (I1, 12) can be output optically and/or acoustically.

4. Motor vehicle according to claim 3, **characterised in that** the first piece of information (I1), which can be output optically or is output optically, is a graphic representation of the road sign (22) ahead and/or is text information corresponding to the road sign (22) ahead.

5. Motor vehicle according to claim 3 or 4, **characterised in that** the second piece of information (12), which can be output optically or is output optically, is text information or a graphic bar display corresponding to the information representing a value of the distance between the road sign (22) ahead and the actual position of the motor vehicle (1).

6. Motor vehicle according to any one of the preceding claims, **characterised in that** the second piece of information (12) can be output once or multiple times depending on the variable distance between the motor vehicle (3) and the road sign (22) ahead.

7. Motor vehicle according to any one of the preceding claims, **characterised in that** the road sign (22) is a sign giving an order and/or a sign with a prohibitive message and/or a warning sign and/or a speed restriction sign.

8. Motor vehicle according to any one of the preceding claims, **characterised in that** the route-specific road sign information also comprises at least one piece of actual driving information relating to the actual driving state of the motor vehicle (1) and/or at least one piece of warning information (13) evaluating information of the motor vehicle (1) relating to the content of the at least one road sign (22) ahead.

9. Motor vehicle according to any one of the preceding claims, **characterised in that** in addition to the at least one piece of route-specific road sign information, at least one piece of information (14) can be output representing an actual road sign (23) relative to the current position of the motor vehicle (1) on the route.

10. Motor vehicle according to any one of the preceding claims, **characterised in that** the detection device (2), the storage device (4) and the control device (5) are assigned to a motor vehicle-side installed navigation device (8), wherein the at least one route-specific piece of road sign information with activated navigation relates to the route (3) of the navigation and with a non-activated navigation relates to a route (3) used with high probability by the motor vehicle (1) or to predefinable or predefined specific route sections.

## Revendications

1. Véhicule automobile, comprenant au moins un dispositif de détection pour détecter la route actuellement parcourue par le véhicule automobile ainsi que la position actuelle du véhicule automobile sur la route, au moins un dispositif de mémoire contenant des informations de panneaux de signalisation se rapportant à la route ainsi qu'au moins un dispositif de commande conçu pour délivrer par l'intermédiaire d'un moyen de sortie au moins une information de panneau de signalisation se rapportant à la route,
dans lequel l'au moins une information de panneau de signalisation se rapportant à la route comprend une première information (I1) concernant au moins un panneau de signalisation (22) situé en avant de la position actuelle du véhicule automobile (1) sur la route (3) ainsi qu'au moins une deuxième information (12) représentant une mesure de la distance du panneau de signalisation situé en avant (22) à la position actuelle du véhicule automobile (1),
**caractérisé en ce que** la sortie de la première et/ou de la deuxième information (I1, 12) est configurable côté utilisateur pour ce qui est du type de panneaux de signalisation qui sont à prendre en compte dans le cadre de la détermination et de la sortie de l'au moins une information de panneau de signalisation se rapportant à la route.

2. Véhicule automobile selon la revendication 1, **caractérisé en ce que** la deuxième information (12) représentant une mesure de la distance du panneau de signalisation situé en avant (22) à la position actuelle du véhicule automobile (1) contient au moins une valeur de distance, notamment la distance, et/ou au moins une valeur de temps, notamment la durée, avant que l'au moins un panneau de signalisation (22) soit atteint.

3. Véhicule automobile selon la revendication 1 ou 2, **caractérisé en ce que** la première et/ou la deuxième information (I1, 12) peuvent être délivrées en sortie de manière optique et/ou acoustique.

4. Véhicule automobile selon la revendication 3, **caractérisé en ce que** la première information (I1) délivrée ou pouvant être délivrée en sortie de manière optique est une représentation graphique du panneau de signalisation situé en avant (22) et/ou une information textuelle correspondant au panneau de signalisation situé en avant (22).

5. Véhicule automobile selon la revendication 3 ou 4, **caractérisé en ce que** la deuxième information (12) délivrée ou pouvant être délivrée en sortie de manière optique est une information textuelle ou une représentation graphique à barres qui correspond à l'information représentant une mesure de la distance du panneau de signalisation situé en avant (22) à la position actuelle du véhicule automobile (1).

6. Véhicule automobile selon l'une des revendications précédentes, **caractérisé en ce que** la deuxième information (12) peut être délivrée en sortie une seule fois ou plusieurs fois en fonction de la distance changeante du véhicule automobile (3) au panneau de signalisation situé en avant (22).

7. Véhicule automobile selon l'une des revendications précédentes, **caractérisé en ce que** le panneau de signalisation (22) est un panneau d'obligation et/ou un panneau d'interdiction et/ou un panneau de danger et/ou un panneau de limitation de vitesse.

8. Véhicule automobile selon l'une des revendications précédentes, **caractérisé en ce que** l'information de panneau de signalisation se rapportant à la route comprend en plus une troisième information d'avertissement (13) évaluant au moins une information d'état de roulage réel concernant l'état de roulage réel du véhicule automobile (1) et/ou au moins une information de véhicule du véhicule automobile (1) eu égard au contenu de l'au moins un panneau de signalisation situé en avant (22).

9. Véhicule automobile selon l'une des revendications précédentes, **caractérisé en ce que**, en plus de l'au moins une information de panneau de signalisation se rapportant à la route, au moins une information (14) représentant un panneau de signalisation (23) actuel par rapport à la position actuelle du véhicule automobile (1) sur la route peut être délivrée en sortie.

10. Véhicule automobile selon l'une des revendications précédentes, **caractérisé en ce que** le dispositif de détection (2), le dispositif de mémoire (4) ainsi que le dispositif de commande (5) sont associés à un dispositif de navigation (8) installé du côté du véhicule automobile, l'au moins une information de panneau de signalisation qui se rapporte à la route se rapporte, si le guidage vers une destination est activé, à la route (3) à la base du guidage activé vers la destination et, si le guidage vers une destination n'est pas activé, à une route (3) parcourue avec une grande probabilité par le véhicule automobile (1) et/ou à certains tronçons de route prédéterminés ou pouvant être prédéterminés.
